# EUROPEAN PATENT SPECIFICATION

(11) **EP 3 723 964 B1**
(45) Date of publication and mention of the grant of the patent: **07.09.2022**
(21) Application number: 18836619.9
(22) Date of filing: 14.12.2018
(51) Int. Cl.: B29C 64/106, B29C 64/321, B29C 64/209, B33Y 10/00, B33Y 30/00

(54) **APPARATUS AND PROCESS OF ADDITIVE MANUFACTURING USING AN EXTRUDER**
VORRICHTUNG UND VERFAHREN ZUR GENERATIVEN FERTIGUNG UNTER VERWENDUNG EINES EXTRUDERS
APPAREIL ET PROCÉDÉ DE FABRICATION ADDITIVE UTILISANT UNE EXTRUDEUSE

(30) Priority: 15.12.2017 US 201762599296 P
(43) Date of publication of application: 21.10.2020
(73) Proprietor: Braskem, S.A., 42810-000 Camaçari (BR)
(72) Inventor: BERNARDI, Alessandro, Houston, TX 77019 (US)
(74) Representative: Osha Liang
(86) International application number: PCT/IB2018/001441
(87) International publication number: WO 2019/116088

(56) References cited:
- EP-A1- 3 112 133
- DE-T5-112013 000 621
- JP-A- 2015 168 135
- US-A1- 2015 130 101

## Description

### BACKGROUND

### Technical Field

Embodiments disclosed herein relate generally to three dimensional printers and methods for performing three dimensional printing. Three dimensional printers are used to print three dimensional objects by depositing successive layers of molten material, such that each layer has a desired shape and successive layers are arranged relative to each other in a desired manner.

Three dimensional printers receive solidified polymer material as an input. The polymer may be formed into an elongated string, which may be wound onto a spool and advanced into the three dimensional printer. Thus, the polymer may be required to be formed into a thread prior to being printed. This may add additional time, equipment, personnel, cost, and/or material to the overall printing process.

Three dimensional printers which do not receive an elongated string of material as an input may have pulses of material form therein. Pulses may comprise distinct volumes of material separated from each other by empty space. If pulsed material is output from a three dimensional printer, the quality and/or integrity of the three dimensional object which is printed may be reduced. In some cases, the printing process may have to be slowed to reduce pulses to an acceptable level.

Many three dimensional printers may also deposit material at a limited range of angles. The angles at which material may be deposited may be limited by the flow path of material through the three dimensional printer, because the flow path may have to be oriented in a particular manner for material to flow from an input end/element of the three dimensional printer to the output end/element of the three dimensional printer. Limiting the range of angles at which three dimensional printers may deposit material may limit the complexity and/or variety of three dimensional objects which may be printed and/or increase the time required to print three dimensional objects. EP 3 112 133 A1 discloses a three dimensional printer according to the preamble of the appended claim 1 and a method of performing three dimensional printing according to the preamble of the appended claim 12.

### SUMMARY

This summary is provided to introduce a selection of concepts that are further described below in the detailed description.

In one aspect, the invention relates to a three dimensional printer according to the appended claim 1.

In another aspect, the invention relates to a method of performing three dimensional printing according to the appended claim 12.

Other aspects and advantages of the claimed subject matter will be apparent from the following description and the appended claims.

### BRIEF DESCRIPTION OF DRAWINGS

FIG. 1a is a schematic view of a three dimensional printer in accordance with the present disclosure.
FIG. 1b is a schematic view of a three dimensional printer in accordance with the present disclosure.
FIG. 2 is a schematic view of a three dimensional printer in accordance with the present disclosure.

### DETAILED DESCRIPTION

Embodiments of the present disclosure relate to a three dimensional printer and to methods of performing three dimensional printing. A three dimensional printer according to embodiments of the present disclosure receives a solidified material, processes the solidified material into a molten phase, and deposits the molten phase in successive layers to form a three dimensional object. A method according to the present disclosure involves processing a solidified material to form a molten phase and depositing the molten phase in successive layers to form a three dimensional object. Embodiments of the present disclosure may allow a three dimensional printer to receive polymer granulate and may allow polymer granulate to be formed into three dimensional objects, which presents advantages compared to previous three dimensional printers and methods of three dimensional printing. In particular, embodiments of the present disclosure relate to the regulation or control of the flow of the molten phase to a print head, to allow for a more uniform flow of material to be printed.

In one aspect, embodiments of the present disclosure relate to a three dimensional printer. The three dimensional printer may be configured to process polymer granulate to form a three dimensional object.

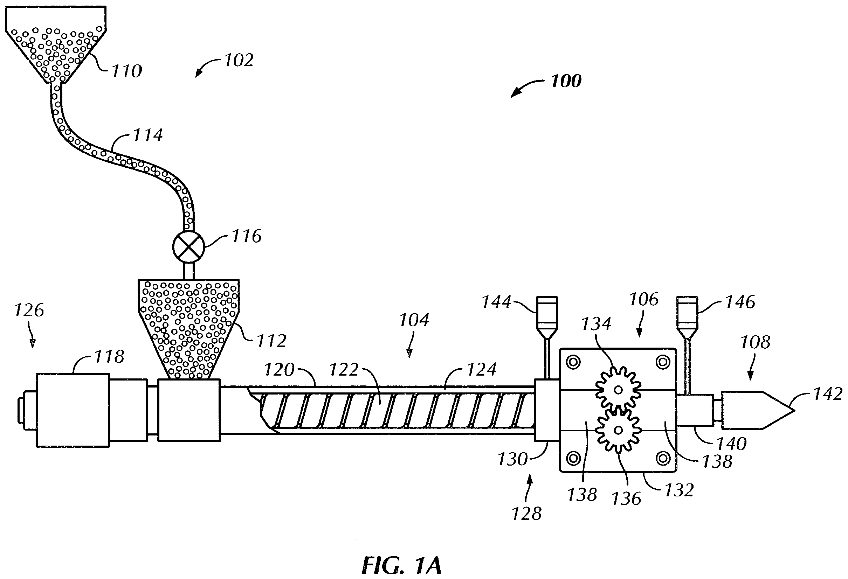

FIGs. 1a-1b illustrates a three dimensional printer 100. The three dimensional printer 100 includes a feed chamber 102, an extruder 104, a melt pump 106, and a printing head 108. The three dimensional printer 100 has a flowpath such that material received by the feed chamber 102 may flow through the feed chamber 102, the extruder 104, the melt pump 106, and the printing head 108 in succession. The material may exit the three dimensional printer 100 through the printing head 108.

The material may be a polymer. When the material is received by the feed chamber 102, the material may be in the form of solidified granulate. In some embodiments, the granulate may include powders or pellets having a size typical for injection molding. A size and shape of the granulate may be chosen based on the production rate, screw diameter, screw length, and screw design of the three dimensional printer. The size of the pellets may be determined based on properties of the polymer (such as melting properties), dimensions of the printer, and/or other considerations.

The feed chamber 102 may be of any type and arrangement suitable to feed solidified material into the printer. However, according to the present invention the feed chamber 102 includes a first chamber 110 and a second chamber 112, which are connected to each other via a flexible hose, *i.e.,* flowline 114. The use of two chambers allows for flexibility in the movement of printer along the x-, y-, and z-axes, or as a moveable arm having six degrees of freedom.

As illustrated, the first chamber 110 may be configured to receive polymer granulate from an external source. The external source may be manual, automatic, or some combination of manual and automatic. For example, a human operator may pour granulate into the first feed chamber 110 or granulate may be automatically conveyed to the first chamber 110 from a storage vessel (not shown). In some embodiments, the first chamber 110 may have a funnel shape, which may promote the movement of granulate to the bottom of the first chamber 110.

A first end of the flowline 114 is connected to the bottom of the first chamber 110, such that granulate may flow from the first chamber 110 into the flowline 114. A second end of the flowline 114 is connected to the top of the second chamber 112, such that granulate may flow from the flowline 114 into the second chamber 112. The flowline 114 is a flexible hose. In some embodiments, the three dimensional printer 100 may be configured such that granulate may only flow through the flowline 114 from the first chamber 110 to the second chamber 112, and may not flow in the opposite direction, i.e. from the second chamber 112 to the first chamber 110.

The second chamber 112 receives granulate from the flowline 114. The three dimensional printer 100 may be controlled to maintain a level of granulate in the second chamber 112, such that the second chamber 112 is full or nearly full of granulate whenever the three dimensional printer 100 is operating. In some embodiments, the second chamber 112 may have a funnel shape.

A control valve 116 may be disposed between the first chamber 110 and the second chamber 112 and may be disposed along the flowline 114. The control valve 116 may be a metering valve. The control valve 116 may be configured to prevent a flow of granulate through the flowline 114 or permit a flow of pellets through the flowline 114. In some embodiments, the control valve 116 may be able to be configured to permit flow of granulate through the flowline 114 at various rates. In some embodiments, the control valve may prevent any flow of granulate through the flowline 114 from the second chamber 112 to the first chamber 110.

As described above, granulate may flow from the flow chamber 102 into the extruder 104. According to the present invention the extruder 104 is arranged downstream of the second chamber 112. The second chamber 112 of the flow chamber 102 is connected to the extruder 104, proximate a first end 126 of the extruder 104, such that granulate may flow out of the second chamber 112 and into extruder 104.

The extruder 104 may be heated, such that granulate in the extruder 104 may be transformed from a solid phase into a molten phase. In some embodiments, the extruder 104 may include a heating element 118. In some embodiments, the granulate 104 may also or instead be heated by shear heating from the extrusion screw or an external heat source (not shown). The extruder 104 may be heated such that the molten phase material therein may be maintained at a constant temperature, or at a desired temperature gradient along the length of the extruder 104.

The extruder may include a screw 122 and a housing 120. The screw 122 may be disposed within the housing 120 such that an annular space 124 is formed within the housing 120 around the screw 122. Once transformed from solid to molten material, molten phase material within the extruder 104 may occupy the annular space 124. The extruder 104 may be configured such that rotating the screw 122 within the housing 120 moves the molten phase material from the first end 126 of the extruder 104 towards a second end 128 of the extruder 104. A rate of rotation of the screw 122 and a size of the annular space 124, specifically an inner diameter and an outer diameter of the annular space 124, may determine a rate of flow of the molten phase material through the extruder 104.

In some embodiments, the extruder 104 may be any type of extruder known in the art and molten phase material may be flowed through the extruder 104 by any means known in the art.

As described above, molten phase material flows from the extruder 104 into a melt pump 106. The second end 128 of the extruder may be connected to an inlet 130 of the melt pump 106, such that molten phase material may flow from the extruder 104 into the melt pump 106.

In some embodiments, the melt pump 106 may be an external gear pump. The melt pump 106 may include a housing 132 and one or more gears 134, 136. In some embodiments, as shown in FIGs. 1a-1b, the melt pump 106 may include two gears 134, 136. A flowpath 138 from the inlet 130 to an outlet 140 may be formed through the melt pump 106, such that the flowpath 138 includes a space between the gears 134, 136.

The melt pump 106 may be configured such that molten phase material flows along the flowpath 138. Rotation of the gears 134, 136 may flow the molten phase material from the inlet 130 to the outlet 140 along the flowpath 138. The molten phase material may flow between the gears 134, 136 as the molten phase material flows along the flowpath 138. Any gap formed between the gears 134, 136 and the housing 132 may be small enough that the molten phase material does not flow between the gears 134, 136 and the housing 132. The rate of rotation of the gears 134, 136 and the diameter of the flowpath 138 may determine the flow rate of molten phase material through the melt pump 106. It is observed that molten material exiting an extruder may experience a pulsed flow. The incorporation of melt pump 106 may mitigate such pulsing that occurs so that the flow of molten material exiting the melt pump 106 is more uniform than the flow coming into the melt pump 106.

Flow rate sensors 144, 146 may be disposed proximate the inlet 130 and/or the outlet 140 of the melt pump 106. The flow rate sensors 144, 146 may measure a rate of flow of molten phase material into and out of the melt pump 106. In some embodiments, the flow rate sensors 144, 146 may be part of a control system, which may command rates of rotation of the screw 122 of the extruder 104 and the gears 134, 136 of the melt pump 106. In some embodiments, data from the flow rate sensors 144, 146 may be displayed to a human operator and/or used for quality control.

The three dimensional printer 100 may be configured such that material disposed in the melt pump 106 may be maintained in a molten phase. In some embodiments, the melt pump 106 may comprise a heating element (not shown). In some embodiments, the melt pump 106 may be heated by an external heat source (not shown). If the extruder 104 is heated by an external heat source, the external heat source which heats the melt pump 106 may or may not be the same external heat source as that heating the extruder 104. In some embodiments, the melt pump 106 may not be heated, but the three dimensional printer 100 may be configured such that material disposed therein maintains heat which was transferred to the material while the material was in the extruder 104, such that the material remains in a molten phase in the melt pump 106. In such embodiments, the melt pump 106 may be insulated and/or have a relatively small size.

As described above, molten phase material flows from the melt pump 106 and into a printing head 108. The printing head 108 may be connected to the outlet 140 of the melt pump 106, such that molten phase material flows out of the melt pump 106 and into the printing head 108.

The printing head 108 may include a tip 142, through which molten phase material may exit the three dimensional printer 100. In one or more embodiments, the tip 142 may be configured such that molten phase material which flows through the tip 142 is formed into a string having a particular diameter and a particular shape. The string of molten phase material may be deposited onto a substrate or onto a layer of material previously deposited by the printer. The string of molten phase material may be deposited to form a portion of a three dimensional object.

The three dimensional printer 100 may be configured such that material disposed in the printing head 108 may be maintained in a molten phase. In some embodiments, the printing head 108 may comprise a heating element (not shown). In some embodiments, the printing head 108 may be heated by an external heat source (not shown). If the extruder 104 and/or the melt pump 106 is heated by an external heat source, the external heat source which heats the printing head 108 may or may not be the same external heat source as that heating the extruder 104 and/or the melt pump 106. In some embodiments, the printing head 108 may not be heated, but the three dimensional printer 100 may be configured such that material disposed therein maintains heat which was transferred to the material while the material was in the extruder 104 and/or the melt pump 106, such that the material remains in a molten phase in the melt pump 106. In such embodiments, the printing head 108 may be insulated and/or have a relatively small size.

The three dimensional printer 100 may be configured such that molten phase material may be output or may not be output from the printing head 108 when the printing head is in operation. For example, material may be required at both a first location and a second location, but not between the locations, to form a desired three dimensional printed object. The printing head 108 may be moved from the first location to the second location and may not output molten phase material during that movement. The three dimensional printer 100 may include a mechanism which may prevent a flow of molten phase material from exiting the printing head 108 when desired. In some embodiments, such a mechanism may comprise preventing the rotation of the gears 134, 136 of the melt pump 106.

As mentioned above, the three dimensional printer 100 may be configured to compensate for pulses of molten phase material which flow out of the extruder 104. Pulses may comprise distinct volumes of molten phase material which may be separated from each other by empty space. It may be desired to not output the molten material from the printing head 108 as pulses, as doing so may leave gaps in the layers of a three dimensional object which may be printed or non-uniform deposits.

The melt pump 106 may process the molten phase material so that the molten material does not enter the printing head 108 in pulses. The melt pump 106 may control the rate of flow of molten phase material therethrough by controlling a rate of rotation of the gears 134, 136. The extruder 104 may control the rate of flow of molten phase material therethrough by controlling a rate of rotation of the screw 122. The screw 122 and the gears 134, 136 may be independently controllable, such that the extruder 104 and the melt pump 106 may have the same flow rate or different flow rates of molten phase material therethrough.

The rates of rotation of the screw 122 and the gears 134, 136 may be chosen such that the flow rate of the molten phase material through the melt pump 106 is slower than the flow rate of the molten phase material through the extruder 104. Molten phase material may accumulate ahead of the inlet 130 of the melt pump 106 while the extruder 104 is outputting a pulse of molten phase material. In the time in between two pulses, during which the extruder 104 is not outputting molten phase material, the accumulated molten phase material may flow through the melt pump 106. In this way, the melt pump 106 may output a continuous stream of molten phase material.

Because of the structure and control described above, the three dimensional printer 100 may be able to output a continuous stream of molten phase material while receiving solidified material in the form of polymer pellets. Thus, the three dimensional printer 100 may be able to print a three dimensional object from polymer pellets. The three dimensional printer 100 may not require a strand of plastic thread as an input.

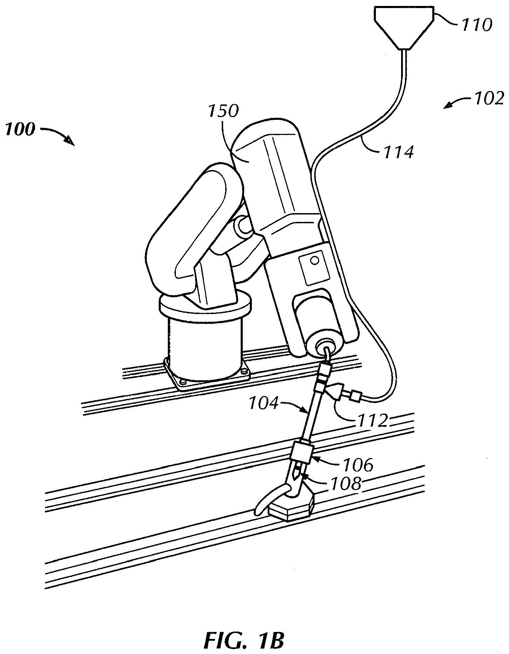

As shown in FIG. 1b, the three dimensional printer 100 may be disposed on an arm 150, which may or may not be a robotic arm. Specifically, in some embodiments, the second chamber 112 of the feed chamber 102, the extruder 104, the melt pump 106, and the printing head 108 may be disposed on the arm 150. The first chamber 110 of the feed chamber 102 may be disposed in a fixed position. The flowline 114 connects the first chamber 110 to the second chamber 112 as described above. The flexible hose or flowline 114 may have sufficient length and flexibility to accommodate movement of the second chamber 112 on the arm 150 relative to the fixed first chamber 110. In some embodiments, the first chamber 110 may be fixed at a sufficient height that pellets from the first chamber may flow downward to the second chamber 112 when the arm 150 is in any configuration.

As described above, the three dimensional printer 100 may include a control valve 116 which may function to maintain a level of pellets in the second chamber 112. The level of pellets in the second chamber 112 may be maintained such that the second chamber 112 is full or nearly full whenever the three dimensional printer 100 is in operation. In this way, pellets may flow from the second chamber 112 to the extruder 104 when the arm 150 is in any configuration. For example, the arm 150 may be oriented such that the extruder 104 is above the second chamber 112 and pellets may flow from the second chamber 112 to the extruder 104 in such a configuration. In this way, the orientations/positions in which the three dimensional printer 100 is capable of printing may not be limited by considerations about the flow of pellets. This may increase the variety and/or complexity of three dimensional objects which may be printed by the three dimensional printer 100 and may decrease the number and/or complexity of printer motions needed to print three dimensional obj ects.

The printing head 108 may be disposed proximate an end of the arm 150. The printing head 108 may be positioned such that molten phase material which flows out of the printing head 108 may be deposited onto a substrate or onto a layer of printed material. The arm 150 may be capable of positioning the printing head 108 in a range of positions and orientations. The printing head 108 may be configured such that molten phase material may exit the printing head 108 and be deposited onto the substrate or printed material in a desired manner when the printing head 108 is oriented at any angle. This may increase the variety and/or complexity of three dimensional objects which may be printed by the three dimensional printer 100 and may decrease the number and/or complexity of printer motions needed to print three dimensional objects.

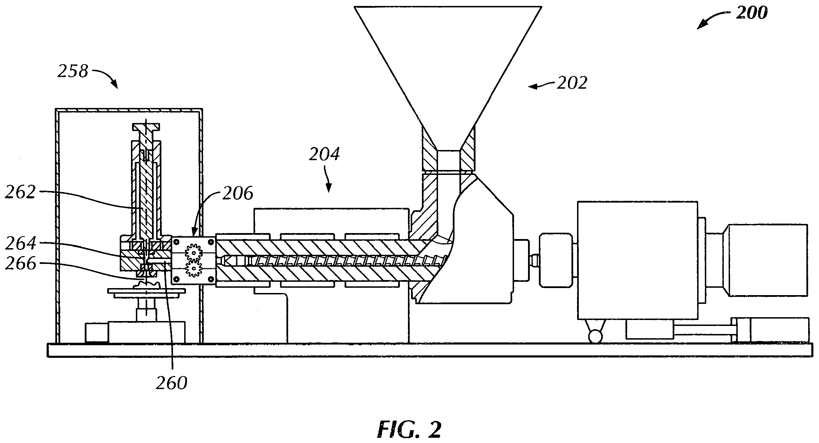

FIG. 2 illustrates a three dimensional printer 200. The three dimensional printer 200 includes a feed chamber 202, an extruder 204, a melt pump 206, and an actuated printing head 258. The three dimensional printer 200 may have a flowpath such that material received by the feed chamber 202 may flow through the feed chamber 202, the extruder 204, the melt pump 206, and the actuated printing head 258 in succession. The material may exit the three dimensional printer 200 through the actuated printing head 258. The feed chamber 202, the extruder 204, and the melt pump 206 may be similar to the features described above with respect to FIGs. 1a-1b. The feed chamber 202 comprises a first chamber and a second chamber connected to each other via a flexible hose (not shown), the extruder 204 being arranged downstream of the second chamber.

The actuated printing head 258 may include a discharge channel 260, an actuator 262, a needle 264, and an outlet 266. The needle 264 may be actuated by the actuator 266. The needle 264 may move through the discharge channel 260 in a direction transverse to the discharge channel 260 and through the outlet 266.

The discharge channel 260 may be connected to the melt pump 206. Molten phase material may pass from the melt pump 206 into the discharge channel 260. When the needle 264 is actuated, the actuated printing head 258 may discharge a droplet of molten phase material from through the outlet 266. Thus, in such embodiment, the molten phase material may be deposited as discrete droplets onto a substrate or onto a previously deposited layer of printed material, rather than as a string of material.

The three dimensional printer 200 may receive solidified polymer granulate as an input material. The three dimensional printer 200, including the melt pump 206, may function to compensate for pulses as described above, such that a continuous stream of material is available to be output from the actuated printing head 258 through the outlet 266 as droplets. The three dimensional printer 200 may be disposed on an arm (not shown) as illustrated with respect to the three dimensional printer 100 described above with respect to FIG. 1b. The three dimensional printer 200 may provide the same or similar advantages to those discussed above with respect to the three dimensional printer 100 shown in FIGs. 1a-1b.

In another aspect, embodiments of the present disclosure relate to a method of performing three dimensional printing. A method in accordance with the present disclosure may be performed using any embodiments of the three dimensional printer described above. For example, the method may be performed using a three dimensional printer having a combination of features described above with respect to different embodiments.

A method of performing three dimensional printing may include the steps of supplying solidified material from at least one feed chamber to an extruder; processing the solidified material into a molten phase in the extruder; receiving the molten phase from the extruder in a melt pump; receiving the molten phase from the melt pump in a printing head; depositing the molten phase from the printing head in successive layers to form a three-dimensional object; wherein the at least one feed chamber comprises a first chamber and a second chamber connected to each other via a flexible hose, wherein the extruder is arranged downstream of the second chamber. In some embodiments, the method may include additional steps not described below. The steps included in a particular embodiment of the method may depend in part on the equipment with which the method is performed.

A solidified material is processed to form a molten phase material. The processing includes heating the solidified material and extruding the material. Extruding the material transforms a solidified material into a molten material that may be subsequently deposited (printed).

The solidified material may be a polymer, for example, acrylonitrile-butadiene-styrene (ABS), poly(lactic acid) (PLA), polycarbonate (PC), polystyrene (PS), high impact polystyrene (HIPS), polycaprolactone (PCL), polyamide, polyolefins (including homopolymers or copolymers), , or any other polymer known in the art. The polymer may be chosen based on desired characteristics of the object which is being printed using the method. The solidified polymer may have the form of granulates. The pellets may or may not be uniform. In some embodiments, the granulates may have a spherical, cylindrical, ellipsoid, or polygonal shape. In some embodiments, the granulate may be standard pellets which are known in the art and produced for applications other than three dimensional printing.

Extruding the material may cause pulses of material to form. Pulses may comprise distinct volumes of material separated by empty space. The pulses may be uniform or non-uniform. In some embodiments, the extruding may be performed in a manner to reduce the formation of pulses and/or to increase the volume of each pulse and to decrease the empty space formed between pulses. In some embodiments, the extruding may be performed such that the pulses are controlled in a desired manner.

The molten phase material, which may be formed by the processing described above, is pumped with a melt pump. Pumping the material may comprise reducing or eliminating pulsing of the material which may be caused by the extruding. Pumping may be performed such that molten phase material flows out of the pump continuously while printing is being performed. Gaps may not be formed in the material which is pumped out of the melt pump. In some embodiments, pumping may be performed by any apparatus known in the art, which may or may not be a melt pump.

The molten phase material which flows out of the melt pump is deposited in successive layers. A first layer may be deposited onto a substrate, and successive layers may be deposited onto previously deposited layers. Each layer of molten phase material may partially or fully solidify prior to the deposition of the next layer of molten phase material. The molten phase material may form a three dimensional obj ect.

In some embodiments, the molten phase material may be deposited in extended strings. One or more extended strings may make up each deposited layer. Extended strings may be straight, curved, angled, or may include a combination of straight, curved, and/or angled portions. In such embodiments, the melt pump discussed above may be controlled to pump out molten phase material whenever a string is being formed.

In some embodiments, the molten phase material may be deposited in droplets. One or more droplets may make up each deposited layer. Droplets in a single layer may be deposited at a distance from each other or touching each other, such that a successive layer of droplets may be deposited on top of the layer. In such embodiments, material which has been pumped by the melt pump discussed above may be output whenever a droplet is being formed.

In some embodiments, the molten phase material may be deposited at any angle. For example, a tip/head through which the molten phase material is deposited onto the substrate may be oriented at any angle relative to the substrate while the material is flowing out of the tip/head. Orienting the tip/head may comprise orienting an arm to which the tip/head is attached. In some embodiments, other components used in the three dimensional printing method may be attached to the arm as well.

In some embodiments, flow rates of materials used in the method may be controlled. The flow rate of pellets into the extruder may be controlled. The extrusion rate/flow rate of material through the extruder as it is being processed from solid phase to molten phase may be controlled, for example, by controlling the rate of rotation of a screw in the extruder. The flow rate of material through the melt pump may be controlled, for example, by controlling the rate of rotation of one or more gears in the melt pump. The flow rate of the material onto the substrate may be controlled.

The flow rates discussed above may be controlled using any means known in the art. For example, a flow rate sensor may measure a flow rate, a processor and/or a human operator may compare the measured flow rate to a desired value, and a valve may throttle the amount of material flowing into the equipment based on the comparison. In some embodiments, the flow rate may be measured indirectly. Flow rate sensors, valves, processors, and any other equipment used to control flow rates of the material may or may not be part of a wired or a wireless network. The network may be any type of network known in the art.

The devices and methods disclosed herein may present advantages over previously used devices and methods for three dimensional printing. Polymer granulates may be used as an input for the three dimensional printer and/or method of the present disclosure. This may eliminate the need to form the polymer into an elongated filament prior to printing, and may thereby reduce the time, equipment, and cost necessary to print, and/or allow materials which previously could not be used for three dimensional printing to be printed. Pulses of material may be reduced or eliminated from the material which is deposited to form a three dimensional object. This may improve the quality of the printed object, reduce the need to reprint objects, and/or increase the rate at which objects may be printed.

## Claims

1. A three dimensional printer (100) comprising:
at least one feed chamber (102) supplying a solidified material;
an extruder (104) configured to receive the solidified material from the at least one feed chamber (102) and to process the solidified material into a molten phase;
a melt pump (106) configured to receive the molten phase from the extruder (104); and
a printing head (108) configured to receive the molten phase from the melt pump (106) and to deposit the molten phase in successive layers to form a three-dimensional object;
**characterised in that**
the at least one feed chamber (102) comprises a first chamber (110) and a second chamber (112) connected to each other via a flexible hose (114), and wherein the extruder (104) is arranged downstream of the second chamber (112).

2. The three dimensional printer (100) of claim 1, wherein the melt pump (106) is configured to regulate a flow of the molten phase being provided to the printing head (108).

3. The three dimensional printer (100) of claim 1 or 2, wherein the solidified material comprises polymer granulate.

4. The three dimensional printer (100) of any of claims 1 to 3, wherein the melt pump (106) comprises an external gear pump.

5. The three dimensional printer (100) of claim 1, further comprising a control valve (116) disposed between an outlet of the first chamber (110) and an inlet of the second chamber (112) and configured to control the flow of polymer pellets into the second chamber (112).

6. The three dimensional printer (100) of claim 5, wherein the control valve (116) is configured to maintain a level of polymer granulate in the second chamber (112).

7. The three dimensional printer (100) of any of claims 1 to 6, wherein the at least one feed chamber (102), the extruder (104), the melt pump (106), and the printing head (108) are disposed on an end of a moveable arm (50).

8. The three dimensional printer (100) of claim 1, wherein the first chamber (110) is maintained in a fixed position and the flexible hose (114) is at least partially attached to an arm (150).

9. The three dimensional printer (100) of any of claims 1 to 8, wherein molten phase may exit the printing head (108) when the printing head (108) is disposed at any angle.

10. The three dimensional printer (100) of any of claims 1 to 9, wherein polymer exits the printing head (108) as a droplet.

11. The three dimensional printer (100) of any of claims 1 to 9, wherein polymer exits the printing head (108) as an elongate string.

12. A method of performing three dimensional printing, the method comprising:
supplying solidified material from at least one feed chamber (102) to an extruder (104);
processing the solidified material into a molten phase in the extruder (104);
receiving the molten phase from the extruder (104) in a melt pump (106);
receiving the molten phase from the melt pump (106) in a printing head (108); and
depositing the molten phase from the printing head (108)in successive layers to form a three-dimensional object;
**characterised in that**
the at least one feed chamber (102) comprises a first chamber (110) and a second chamber (112) connected to each other via a flexible hose (114), and wherein the extruder (104) is arranged downstream of the second chamber (112).

13. The method of claim 12, further comprising controlling a rate of flow of the solidified material into an extruder (104).

14. The method of any of claims 12 or 13, further comprising controlling a rate of flow of the molten phase onto a substrate.

15. The method of any of claims 12 to 14, wherein the melt pump (106) comprises an external gear pump.

## Patentansprüche

1. Ein dreidimensionaler Drucker (100), der Folgendes aufweist:
mindestens eine Zuführkammer (102), die ein verfestigtes Material zuführt;
einen Extruder (104), der so konfiguriert ist, dass er das verfestigte Material aus der mindestens einen Zuführkammer (102) aufnimmt und das verfestigte Material zu einer geschmolzenen Phase verarbeitet;
eine Schmelzepumpe (106), die so konfiguriert ist, dass sie die geschmolzene Phase aus dem Extruder (104) aufnimmt; und
einen Druckkopf (108), der so konfiguriert ist, dass er die geschmolzene Phase von der Schmelzepumpe (106) empfängt und die geschmolzene Phase in aufeinanderfolgenden Schichten aufträgt, um ein dreidimensionales Objekt zu bilden;
**dadurch gekennzeichnet, dass** die mindestens eine Zuführkammer (102) eine erste Kammer (110) und eine zweite Kammer (112) aufweist, die über einen flexiblen Schlauch (114) miteinander verbunden sind, und
wobei der Extruder (104) stromabwärts der zweiten Kammer (112) angeordnet ist.

2. Dreidimensionaler Drucker (100) nach Anspruch 1, wobei die Schmelzepumpe (106) so konfiguriert ist, dass sie einen Fluss der geschmolzenen Phase reguliert, die dem Druckkopf (108) zugeführt wird.

3. Der dreidimensionale Drucker (100) nach Anspruch 1 oder 2, wobei das verfestigte Material Polymergranulat aufweist.

4. Dreidimensionaler Drucker (100) nach einem der Ansprüche 1 bis 3, wobei die Schmelzepumpe (106) eine externe Zahnradpumpe aufweist.

5. Der dreidimensionale Drucker (100) nach Anspruch 1, der ferner ein Steuerventil (116) aufweist, das zwischen einem Auslass der ersten Kammer (110) und einem Einlass der zweiten Kammer (112) angeordnet und so konfiguriert ist, dass es den Fluss von Polymergranulat in die zweite Kammer (112) steuert.

6. Der dreidimensionale Drucker (100) nach Anspruch 5, wobei das Steuerventil (116) so konfiguriert ist, dass es ein Niveau von Polymergranulat in der zweiten Kammer (112) aufrechterhält.

7. Dreidimensionaler Drucker (100) nach einem der Ansprüche 1 bis 6, wobei die mindestens eine Zuführkammer (102), der Extruder (104), die Schmelzepumpe (106) und der Druckkopf (108) an einem Ende eines beweglichen Arms (50) angeordnet sind.

8. Dreidimensionaler Drucker (100) nach Anspruch 1, wobei die erste Kammer (110) in einer festen Position gehalten wird und der flexible Schlauch (114) zumindest teilweise an einem Arm (150) befestigt ist.

9. Dreidimensionaler Drucker (100) nach einem der Ansprüche 1 bis 8, wobei die geschmolzene Phase aus dem Druckkopf (108) austreten kann, wenn der Druckkopf (108) in einem beliebigen Winkel angeordnet ist.

10. Dreidimensionaler Drucker (100) nach einem der Ansprüche 1 bis 9, wobei das Polymer den Druckkopf (108) als Tröpfchen verlässt.

11. Dreidimensionaler Drucker (100) nach einem der Ansprüche 1 bis 9, bei dem das Polymer den Druckkopf (108) als länglicher Strang verlässt.

12. Verfahren zum Durchführen eines dreidimensionalen Drucks, wobei das Verfahren aufweist:
Zuführen von verfestigtem Material aus mindestens einer Zuführkammer (102) zu einem Extruder (104);
Verarbeiten des verfestigten Materials zu einer geschmolzenen Phase in dem Extruder (104);
Aufnehmen der geschmolzenen Phase aus dem Extruder (104) in einer Schmelzepumpe (106);
Aufnehmen der geschmolzenen Phase von der Schmelzepumpe (106) in einem Druckkopf (108); und
Ablagern der geschmolzenen Phase aus dem Druckkopf (108) in aufeinanderfolgenden Schichten, um ein dreidimensionales Objekt zu bilden;
**dadurch gekennzeichnet, dass** die mindestens eine Zuführkammer (102) eine erste Kammer (110) und eine zweite Kammer (112) aufweist, die über einen flexiblen Schlauch (114) miteinander verbunden sind, und
wobei der Extruder (104) stromabwärts der zweiten Kammer (112) angeordnet ist.

13. Verfahren nach Anspruch 12, das ferner die Steuerung der Durchflussmenge des verfestigten Materials in einen Extruder (104) aufweist.

14. Verfahren nach einem der Ansprüche 12 oder 13, das ferner die Steuerung der Fließgeschwindigkeit der geschmolzenen Phase auf ein Substrat aufweist.

15. Verfahren nach einem der Ansprüche 12 bis 14, wobei die Schmelzepumpe (106) eine externe Zahnradpumpe aufweist.

## Revendications

1. Imprimante tridimensionnelle (100) comprenant :
au moins une chambre d'alimentation (102) fournissant un matériau solidifié ;
une extrudeuse (104) configurée pour recevoir le matériau solidifié de l'au moins une chambre d'alimentation (102) et pour traiter le matériau solidifié en une phase fondue ;
une pompe pour produit fondu (106) configurée pour recevoir la phase fondue de l'extrudeuse (104) ; et
une tête d'impression (108) configurée pour recevoir la phase fondue de la pompe pour produit fondu (106) et déposer la phase fondue en couches successives pour former un objet tridimensionnel ;
**caractérisée en ce que** l'au moins une chambre d'alimentation (102) comprend une première chambre (110) et une seconde chambre (112) reliées l'une à l'autre par un tuyau flexible (114), et
dans laquelle l'extrudeuse (104) est disposée en aval de la seconde chambre (112).

2. Imprimante tridimensionnelle (100) selon la revendication 1, dans laquelle la pompe pour produit fondu (106) est configurée pour réguler un écoulement de la phase fondue fournie à la tête d'impression (108).

3. Imprimante tridimensionnelle (100) selon la revendication 1 ou 2, dans laquelle le matériau solidifié comprend un granulé de polymère.

4. Imprimante tridimensionnelle (100) selon l'une quelconque des revendications 1 à 3, dans laquelle la pompe pour produit fondu (106) comprend une pompe à engrenages externes.

5. Imprimante tridimensionnelle (100) selon la revendication 1, comprenant en outre une vanne de commande (116) disposée entre une sortie de la première chambre (110) et une entrée de la seconde chambre (112), et configurée pour commander l'écoulement de pastilles de polymère dans la seconde chambre (112).

6. Imprimante tridimensionnelle (100) selon la revendication 5, dans laquelle la vanne de commande (116) est configurée pour maintenir un niveau de granulé de polymère dans la seconde chambre (112).

7. Imprimante tridimensionnelle (100) selon l'une quelconque des revendications 1 à 6, dans laquelle l'au moins une chambre d'alimentation (102), l'extrudeuse (104), la pompe pour produit fondu (106) et la tête d'impression (108) sont disposées sur une extrémité d'un bras mobile (50).

8. Imprimante tridimensionnelle (100) selon la revendication 1, dans laquelle la première chambre (110) est maintenue dans une position fixe et le tuyau flexible (114) est au moins partiellement fixé à un bras (150).

9. Imprimante tridimensionnelle (100) selon l'une quelconque des revendications 1 à 8, dans laquelle la phase fondue peut sortir de la tête d'impression (108) lorsque la tête d'impression (108) est disposée à un angle quelconque.

10. Imprimante tridimensionnelle (100) selon l'une quelconque des revendications 1 à 9, dans laquelle du polymère sort de la tête d'impression (108) sous forme de gouttelette.

11. Imprimante tridimensionnelle (100) selon l'une quelconque des revendications 1 à 9, dans laquelle du polymère sort de la tête d'impression (108) sous la forme d'un cordon allongé.

12. Procédé de réalisation d'une impression tridimensionnelle, le procédé comprenant les étapes suivantes :
la fourniture d'un matériau solidifié à partir d'au moins une chambre d'alimentation (102) à une extrudeuse (104) ;
la transformation du matériau solidifié en une phase fondue dans l'extrudeuse (104);
la réception de la phase fondue de l'extrudeuse (104) dans une pompe pour produit fondu (106) ;
la réception de la phase fondue provenant de la pompe pour produit fondu (106) dans une tête d'impression (108) ; et
le dépôt de la phase fondue à partir de la tête d'impression (108) en couches successives pour former un objet tridimensionnel ;
**caractérisé en ce que** l'au moins une chambre d'alimentation (102) comprend une première chambre (110) et une seconde chambre (112) reliées l'une à l'autre par un tuyau flexible (114), et
dans laquelle l'extrudeuse (104) est disposée en aval de la seconde chambre (112).

13. Procédé selon la revendication 12, comprenant en outre le contrôle d'un débit d'écoulement du matériau solidifié dans une extrudeuse (104).

14. Procédé selon l'une quelconque des revendications 12 ou 13, comprenant en outre le contrôle d'un débit d'écoulement de la phase fondue sur un substrat.

15. Procédé selon l'une quelconque des revendications 12 à 14, dans lequel la pompe pour produit fondu (106) comprend une pompe à engrenages externes.
